(19) **Europäisches Patentamt / European Patent Office / Office européen des brevets**

(11) **EP 1 472 935 B1**

(12) **EUROPEAN PATENT SPECIFICATION**

(45) Date of publication and mention
of the grant of the patent:
**23.04.2008 Bulletin 2008/17**

(51) Int Cl.:
*A23L 1/0522* *(2006.01)*    *A23L 1/16* *(2006.01)*

(21) Application number: **03076301.5**

(22) Date of filing: **02.05.2003**

(54) **Translucent noodles**

Durchsichtige Nudeln

Nouilles transparentes

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(43) Date of publication of application:
**03.11.2004 Bulletin 2004/45**

(73) Proprietor: **Coöperatie AVEBE U.A.
9641 GK Veendam (NL)**

(72) Inventors:
• **Semeijn, Cindy
9722 WD Groningen (NL)**
• **Schols, Henk Arie
6707 HG Wageningen (NL)**
• **Chen, Zhenghong
9607 PT Foxhol (NL)**
• **Buwalda, Pieter Lykle
9718 MJ Groningen (NL)**

(74) Representative: **Prins, Adrianus Willem et al
Vereenigde,
P.O.Box 87930
2508 DH Den Haag (NL)**

(56) References cited:
**EP-A- 0 738 474**        **US-A- 5 153 020**
**US-A- 5 916 616**

• **PATENT ABSTRACTS OF JAPAN vol. 012, no. 181
(C-499), 27 May 1988 (1988-05-27) & JP 62 289156
A (LION CORP;OTHERS: 01), 16 December 1987
(1987-12-16)**
• **PATENT ABSTRACTS OF JAPAN vol. 1997, no.
09, 30 September 1997 (1997-09-30) & JP 09
121801 A (SHIMADAYA HONTEN:KK), 13 May
1997 (1997-05-13)**
• **SINGH U ET AL: "PHYSICOCHEMICAL
CHARACTERISTICS OF PIGEONPEA AND MUNG
BEAN STARCHES AND THEIR NOODLE
QUALITY" JOURNAL OF FOOD SCIENCE,
INSTITUTE OF FOOD TECHNOLOGISTS.
CHICAGO, US, vol. 54, no. 5, 1 September 1989
(1989-09-01), pages 1293-1297, XP000080929
ISSN: 0022-1147**
• **TEGGE G: "Stärke und Stärkederivate" 1984 ,
BEHR , HAMBURG XP002258367 * page 42 - page
48 ***

**EP 1 472 935 B1**

**Description**

The invention relates to a translucent food product and to a method for preparing said product.

Translucent foods are specialty oriental foods. Well-known examples include glass noodles and Liang Feng, which means "cold gel" or "cold curd" or "cold strand". Translucent food products generally must be prepared from legume starches, most notably mung bean starch in order to get good results with respect to translucency, elasticity and slipperiness.

Glass noodles are translucent both before and after cooking, are resilient after cooking, and have a bland taste. Mung bean starch provides unique properties for this application and is the ideal material for noodle manufacture. Another well known starch for this application is sweet potato starch, but the quality of noodle based on sweet potato starch is generally inferior to that of noodles based on mung bean starch. Mung bean starch is, however, expensive. Accordingly, attempts have been made to replace it with other starches. Proposals to use leguminose starches have been published, but the availability of this type of starches is often even more limited. Another frequently described possibility is a partial or complete replacement of mung bean or sweet potato starch by chemical or genetically modified starches, in particular by starches derived from tapioca and potato.

For instance, WO-00/54605 (to Aventis Cropscience GmbH) describes the partial replacement of mung bean starch with a genetically modified potato starch with an elevated amylose content. The acceptance of genetically modified food ingredients is, however, low.

US patent 4,871,572 (to National Starch & Chemical Co.) describes the application of crosslinked potato starch in glass noodles. Although recipes tend to be cheaper using these starches, the price is still rather high. Another disadvantage in acceptance for the public is the label as "food starch modified" on the packaging of the food stuff. The reason why genetically or chemically modified starches are applied is that it is generally accepted that for this type of application the starch needs to be gelatinised according to a "C"-type of gelatinisation curve as disclosed in Chen et al., J. Food Sci, 2002, 67: 3342-3347, or Chen et al., J. Food Sci, 2002, 68: 431-437.

As has already been mentioned, Liang Feng is a popular, traditional Asian starch gel food product. It is usually cut to small pieces or sliced to noodle strands and consumed with a sauce, especially in summer. The ideal Liang Feng is elastic, slippery and tender. In general, mung bean starch and other legume starches are considered to be the most suited materials for making high quality Liang Feng. Other starches, such as normal potato, cereal or sweet potato starches are not suitable in that they produce a product of which the structure is too weak and the texture is too sticky.

EP-A-0 738 474 and US-A-5 916 616 both describe a process for making transparent noodles based on normal potato starch.

JP-A-09 121 801 describes the preparation of a water-containing transparent rice noodle based on raw rice.

JP-62 289 156 describes instant harusame containing sweet potato starch.

Surprisingly it has now been found that selected small granular potato starch is very well suited for the preparation of translucent foods. For example it has been found that with small granular potato starch, in spite of not having a "C" type gelatinization, a glass noodle can be prepared having a satisfactory clarity and translucency in the dried state, which has earlier been found to be impossible using non-modified potato starch. Accordingly, the invention relates to a translucent food prepared from granular potato starch having a weight average particle size of less than 35 $\mu$m and wherein 90% of the granules are smaller than 20 $\mu$m.

As is illustrated in the appended examples, small granular potato starch imparts superior dough rheological properties, clarity and elasticity to translucent foods. Translucent food products based on small granular starch according to the invention have furthermore excellent organoleptic characteristics. In addition, the use of small granular starch leads to a low cooking loss during preparation of the translucent food.

Regular potato starch consists of granules having a weight average particle size in the range of form 5-100 $\mu$m. In accordance with the invention, the weight average particle size is defined as the granular size as measured by Coulter Counter Multisizing and averaged based on weight. Using Coulter

Counter Multisizing, the weight average granular size of regular potato starch is about 43 $\mu$m and the number average is about 23 $\mu$m.

Small granular starch can be produced from regular starch in many ways: hydrocyclone separation, dry or wet sieving, air classification, and the like. For potato starch, it is also possible to harvest potatoes earlier than is normal, thereby achieving that starch isolated from the early (i.e. at the beginning of the harvesting period) harvested potatoes has a smaller granular size. It is furthermore possible to genetically modify a plant, such as a potato plant, to produce starch of smaller granular size. The weight average particle size of the granules used in accordance with the invention to produce glass noodles, as measured by Coulter Counter Multisizing is smaller than 35 $\mu$m, preferably smaller than 25 $\mu$m, and even more preferably smaller than 20 $\mu$m. The lower limit of the weight average particle size of the small granular potato starch used in accordance with the invention is not particularly critical, but will typically be about 10 or 15 $\mu$m. The particle size of 90% of the granules used in accordance with the invention is smaller than 20 $\mu$m. Preferably, 95% and even more preferably 99% of the granules are smaller than 20 $\mu$m.

With preference potato starch or sweet potato starch is used. It is further possible to use starches with varying amylose content (0-90%), as long as they are treated in such a way as to fulfil the criteria about granule weight average and size. The invention also contemplates use of starches that are obtained from genetically modified crops such as potato starch.

It is to be understood that the use of modified small granular potato starch is also encompassed by the invention. Such modification can be accomplished by any known chemical, physical or enzymatic method, or combination of such methods.

In a preferred embodiment of the invention, the translucent food product is a glass noodle. In principle, there are two general ways of manufacturing glass noodles, both involving extrusion. The first method (method 1) uses gravity as the extrusion force; and the second method (method 2) uses single or twin screw extruders.

In method 1, part of the starch, approximately 5% is first gelatinised in excess hot water to yield a viscous paste. In this paste, the remainder of the starch is mixed at approximately 50 °C yielding a dough that can be extruded using gravity to filaments of partly gelatinised starch. To this end, the filaments are cooked in boiling water for approximately 10 seconds and subsequently run through ice cold water. The filaments are then cut and the resulting noodle threads are hung on rods to drip and drain. The noodles are frozen either in winter in the open air or in special freezing rooms, thawed and dried in drying cabinets or in the open air, except that noodles made from legume starches can be dried without a freezing step. From the last type of drying, the Japanese name for glass noodles, Harusame, meaning spring rain noodles, is derived.

In method 2, the starch is first blended with water and then partly gelatinized in a single or twin screw extruder. The partly gelatinized starch is directly extruded in a second step. The resulting noodle threads are cut or shaped and than hung on rods, dried in the air or dried in an oven.

In another preferred embodiment, the translucent food product is Liang Feng. It was found that small size granular starch, in particular potato starch, is highly suitable for making Liang Feng. The texture of Liang Feng made from small size granular starch according to the invention has the desired elastic and slippery characteristics. Liang Feng according to the invention can be prepared in any conventional manner, by replacing the conventionally used legume starch by a small size granular starch.

The invention will now be further illustrated by the followings

examples

## Examples

I: Fractionation of potato starch granules

Potato starch was fractionated by sieving (model AS200 digit; F. Kurt Retsch GmbH & Co. Germany) with tap water, and then air dried at 40°C. The potato starch was separated into 4 fractions: larger than 53 $\mu$m, 36-53 $\mu$m, 20-36 $\mu$m and smaller than 20 $\mu$m

II: Determination of granular size

Particle size distribution was measured with Coulter Multisizer (Coulter Multisizer II)using isotonic water as an electrolyte. Samples were dispersed in demi water, then diluted in isotonic water and put in an ultrasonic bath (max. 2min.). Results are the average of two measurements.

III: Starch noodle preparation

Part of the starch (5%) was pregelatinised in distilled water (1:9 w/v) and then mixed with the remaining 95% of the starch. The mixture was kneaded with water to dough consistency *au bain-marie* at 40°C. The uniform dough with moisture content of about 55% was extruded by a cylindrical extruder. The dough was extruded through the holes (about 1.5 cm diameter) of the stainless steel cylinder by gravity or by pressing, directly into hot water (95-98°C), and heated for 50-70 seconds (when noodles were floated on the surface of water then transfer them into cold water) at this temperature before transferring into cold water. After rinsing in cold water, the noodles were precooled at 4°C for 6 hours, subsequently frozen at -5 to -2°C for 6 to 8 hours, and then dried by air. The dried noodles were equilibrated at room temperature for 4 hours and then packed in polyethylene bags and stored at room temperature prior to analysis. The noodles were evaluated visually for clarity in dried and in cooked form.

IV: Cooking loss and swelling index

Cooking loss and the swelling index were measured according to Mesteres et al., J. Food Sci 53: 1809-1812, 1998) after minor modifications as described below. About 5 g (W$_1$) of cut noodles (5 cm long) were soaked in 150 ml of distilled water at 30°C for 15 minutes and then cooked for 10 minutes. The noodles were then washed with 50 ml of distilled water. The cooking water combined with the washing water was dried in an oven at 130°C to a constant weight (W$_2$). Distilled water (200 ml) was dried under the same condition to a constant weight (W$_3$; blank). After cooking the noodles were drained for 3 minutes and rapidly weighed (W$_4$). Cooking loss and swelling index were calculated with the following equations (in which M means the moisture of the original noodle):

$$\text{Cooking loss (\%)} = (W_2 * W_3) \times 100 / W_1 \times (1\text{-}M)$$

$$\text{Swelling index (\%)} = (W_4 . W_1 \times (1\text{-}M)) \times 100 / W_1 \times (1\text{-}M)$$

V: Results

The results of the particle size measurement, visual inspections and swelling and cooking loss evaluations are summarized in the following Table 1. The signs give the results compared to mung bean starch noodles which are taken as the standard having all the desired characteristics (++ means as good as mung bean starch).

Table 1. Evaluation

| Starch | Fraction | Granular Size (μm) | Fluidity | Strand Making | Clarity Dry noodle | Clarity Wet noodle | Cooking Loss (%) | Swelling (%) |
|---|---|---|---|---|---|---|---|---|
| potato | - | 5-100 | --- | --- | --- | ++ | 8.8 | 932 |
| Potato | >53 μm | 53-100 | --- | --- | --- | ++ | 9.3 | 973 |
| Potato | 36-53 μm | 36-53 | --- | --- | --- | ++ | 4.3 | 865 |
| Potato | 20-36 μm | 20-36 | 0 | 0 | ++ | ++ | 6.1 | 892 |
| Potato | <20 μm | 5-20 | ++ | ++ | ++ | ++ | 2.2 | 756 |
| Sweet potato | - | 3-30 | - | 0 | ++ | + | 2.1 | 552 |
| Mung bean | - | 5-25 | ++ | ++ | ++ | ++ | 1.8 | 334 |

**Claims**

1.   Translucent noodle food product prepared from granular potato starch having a weight average particle size of less than 35 μm, wherein 90% of the granules are smaller than 20 μm.

2.   Translucent noodle food product according to claim 1, wherein the weight average particle size of the starch is less than 25 μm, preferably less than 20 μm.

3.   Translucent noodle food product according to claim 1 or 2, wherein 95% of the granules are smaller than 20 μm.

4.   Translucent noodle food product according to any of the preceding claims, wherein the granular starch is obtained by hydrocyclone separation, dry or wet sieving, air classification, or from potatoes obtained by early harvesting, or from potatoes obtained from a genetically modified potato plant.

5.   Translucent noodle food product according to any of the preceding claims, wherein the noodle food product is a glass noodle or Liang Feng.

6.   Use of granular potato starch having a weight average particle size of less than 35 μm, wherein 90% of the granules are smaller than 20 μm, for the preparation of a translucent noodle food product.

7. Use according to claim 6, wherein the weight average particle size of the starch is less than 25 $\mu$m, preferably less than 20 $\mu$m.

8. Use according to claim 6 or 7, wherein 95% of the granules are smaller than 20 $\mu$m.

9. Use according to any of the claims 6-8, wherein the potato starch is obtained by hydrocyclone separation, dry or wet sieving, air classification, or from potatoes obtained by early harvesting, or from potatoes obtained from a genetically modified potato plant.

10. Use according to any of the claims 6-9, wherein the granular potato starch replaces a legume starch.

11. Use according to claim 10, wherein the legume starch is mung bean starch.

12. Use according to any of the claims 6-11, wherein the translucent noodle food product is a glass noodle or Liang Feng.


**Patentansprüche**

1. Transluzentes Nudellebensmittel, hergestellt aus körniger Kartoffelstärke mit einer durchschnittlichen Teilchengröße (Gewichtsmittel) von weniger als 35 $\mu$m, wobei 90% der Körner kleiner als 20 $\mu$m sind.

2. Transluzentes Nudellebensmittel nach Anspruch 1, wobei die durchschnittliche Teilchengröße (Gewichtsmittel) der Stärke weniger als 25 $\mu$m beträgt, vorzugsweise weniger als 20 $\mu$m.

3. Transluzentes Nudellebensmittel nach Anspruch 1 oder 2, wobei 95% der Körner kleiner als 20 $\mu$m sind.

4. Transluzentes Nudellebensmittel nach einem der vorhergehenden Ansprüche, wobei die körnige Stärke erhalten wird durch Hydrocyclonabtrennung, Trocken- oder Nasssieben, Luftsichten oder aus Kartoffeln, die durch frühes Ernten erhalten werden, oder aus Kartoffeln, die aus einer gentechnisch veränderten Kartoffelpflanze erhalten werden.

5. Transluzentes Nudellebensmittel nach einem der vorhergehenden Ansprüche, wobei das Nudellebensmittel eine Glasnudel oder Liang Feng ist.

6. Verwendung von körniger Kartoffelstärke mit einer durchschnittlichen Teilchengröße (Gewichtsmittel) von weniger als 35 $\mu$m, wobei 90% der Körner kleiner als 20 $\mu$m sind, zur Herstellung eines transluzenten Nudellebensmittels.

7. Verwendung nach Anspruch 6, wobei die durchschnittliche Teilchengröße (Gewichtsmittel) der Stärke weniger als 25 $\mu$m beträgt, vorzugsweise weniger als 20 $\mu$m.

8. Verwendung nach Anspruch 6 oder 7, wobei 95% der Körner kleiner als 20 $\mu$m sind.

9. Verwendung nach einem der Ansprüche 6-8, wobei die Kartoffelstärke erhalten wird durch Hydrocyclonabtrennung, Trocken- oder Nasssieben, Luftsichten oder aus Kartoffeln, die durch frühes Ernten erhalten werden, oder aus Kartoffeln, die aus einer gentechnisch veränderten Kartoffelpflanze erhalten werden.

10. Verwendung nach einem der Ansprüche 6-9, wobei die körnige Kartoffelstärke Hülsenfruchtstärke ersetzt.

11. Verwendung nach Anspruch 10, wobei die Hülsenfruchtstärke Mungobohnenstärke ist.

12. Verwendung nach einem der Ansprüche 6-8, wobei das transluzente Nudellebensmittel eine Glasnudel oder Liang Feng ist.


**Revendications**

1. Produit alimentaire de nouilles transparentes préparé à partir d'amidon granulaire de pomme de terre ayant une taille de particules moyenne en poids inférieure à 35 $\mu$m, dans lequel 90 % des granules sont plus petits que 20 $\mu$m.

**2.** Produit alimentaire de nouilles transparentes selon la revendication 1, dans lequel la taille de particules moyenne en poids de l'amidon est inférieure à 25 $\mu$m, de préférence inférieure à 20 $\mu$m.

**3.** Produit alimentaire de nouilles transparentes selon la revendication 1 ou 2, dans lequel 95 % des granules sont plus petits que 20 $\mu$m.

**4.** Produit alimentaire de nouilles transparentes selon l'une quelconque des revendications précédentes, dans lequel l'amidon granulaire de pomme de terre est obtenu par séparation par hydrocyclone, par tamisage à sec ou humide, par turboséparation, ou à partir de pommes de terre obtenues par récolte précoce, ou à partir de pommes de terre obtenues d'un plant de pommes de terre génétiquement modifié.

**5.** Produit alimentaire de nouilles transparentes selon l'une quelconque des revendications précédentes, dans lequel le produit alimentaire de nouilles est une nouille cellophane ou Liang Feng.

**6.** Utilisation d'amidon granulaire de pomme de terre ayant une taille de particules moyenne en poids inférieure à 35 $\mu$m, dans laquelle 90 % des granules sont plus petits que 20 $\mu$m, pour la préparation d'un produit alimentaire de nouilles transparentes.

**7.** Utilisation selon la revendication 6, dans laquelle la taille de particules moyenne en poids de l'amidon est inférieure à 25 $\mu$m, de préférence inférieure à 20 $\mu$m.

**8.** Utilisation selon la revendication 6 ou 7, dans laquelle 95 % des granules sont plus petits que 20 $\mu$m.

**9.** Utilisation selon l'une quelconque des revendications 6 à 8, dans laquelle l'amidon de pomme de terre est obtenu par séparation par hydrocyclone, par tamisage à sec ou humide, par turboséparation, ou à partir de pommes de terre obtenues par récolte précoce, ou à partir de pommes de terre obtenues d'un plant de pommes de terre génétiquement modifié.

**10.** Utilisation selon l'une quelconque des revendications 6 à 9, dans laquelle l'amidon de pomme de terre granulaire remplace un amidon de légume.

**11.** Utilisation selon la revendication 10, dans laquelle l'amidon de légume est l'amidon de haricot mungo.

**12.** Utilisation selon l'une quelconque des revendications 6 à 11, dans laquelle le produit alimentaire de nouilles transparentes est une nouille cellophane ou Liang Feng.

**EP 1 472 935 B1**

**Patent documents cited in the description**

- WO 0054605 A
- US 4871572 A
- EP 0738474 A
- US 5916616 A
- JP 09121801 A
- JP 62289156 B

**Non-patent literature cited in the description**

- **CHEN et al.** *J. Food Sci,* 2002, vol. 67, 3342-3347
- **CHEN et al.** *J. Food Sci,* 2002, vol. 68, 431-437
- **MESTERES et al.** *J. Food Sci,* 1998, vol. 53, 1809-1812